# EUROPEAN PATENT SPECIFICATION

(11) **EP 2 773 554 B1**
(45) Date of publication and mention of the grant of the patent: **19.10.2016**
(21) Application number: 11832063.9
(22) Date of filing: 08.11.2011
(51) Int. Cl.: B62M 11/18, F16H 1/28, B62M 11/14, F16H 3/44

(54) **DUAL SPEED BOTTOM BRACKET**
TRETLAGER MIT ZWEI GESCHWINDIGKEITEN
PÉDALIER À DEUX VITESSES

(43) Date of publication of application: 10.09.2014
(73) Proprietor: EBM Solutions Pty Ltd, Adelaide, SA 5000 (AU)
(72) Inventor: YIP, Colin, Adelaide, South Australia 5000 (AU)
(74) Representative: ABG Patentes, S.L.
(86) International application number: PCT/AU2011/001434
(87) International publication number: WO 2013/067568

(56) References cited:
- EP-A1- 1 980 484
- GB-A- 952 902
- SU-A1- 542 672
- SU-A1- 582 137
- US-A- 3 809 195
- US-A- 4 229 997

## Description

### FIELD OF THE INVENTION

The field of the present invention relates to derailleurs for bicycles and in particular for derailleurs fitted inside the bottom bracket of a bicycle.

### DESCRIPTION OF THE PRIOR ART

In order to improve the riding performance of the bike, making it more comfortable to ride, a derailleur has to be used. Especially for a racing bike the derailleur has to be used to get the greatest speed.

At present, there are two kinds of derailleur used on bicycles. One type is a sprocket type in which a set of sprocket wheels with different sizes are installed at the bottom bracket area, usually referred to as the front chain rings. There is then a separate set of sprockets located on the rear wheel of the bicycle, the front chain rings and the rear sprockets operatively connected by a chain.

Through adjustment of the position of the chain, different combinations of rear sprockets and front chainrings can be achieved resulting in different gear developments, which is the distance the bicycle moves with each revolution of the pedals. This then changes the velocity ration and speed of the bicycle.

Another type of derailleur is the gearbox derailleur, the principle being the same as that used in cars, through meshing different gear pairs to obtain different velocity ratio. This kind of derailleur is mainly installed on the axle of the rear wheel. Document EP 1980484 discloses a bicycle transmission in accordance with the preamble of claim 1.

### OBJECT OF THE INVENTION

It is an object of the present invention to provide a novel bicycle gear transmission system.

Other objects and advantages of the present invention will become apparent from the following description, taking in connection with the accompanying drawings, wherein, by way of illustration and example, an embodiment of the present invention is disclosed.

### SUMMARY OF THE INVENTION

According to the present invention, in accordance with claim 1, there is a bicycle transmission system in a bottom bracket set of a bicycle, the transmission system including;
a planetary gear system, having
   a sun gear,
   a plurality of planet gears and
   a internal ring gear, wherein
a sprocket wheel operatively connected with the internal ring gear of the planetary gear system,
the plurality of planet gears being rotatably mounted to a planet carrier plate;
an overrunning clutch capable of engagement with the internal ring gear;
a position shifter collar; and
a plurality of clutch pawls mounted in the bottom bracket and being controllable by engagement with and rotation of the position shifter collar, to engaging or disengaging with the sun gear thereby providing a means of changing gears. and the overrunning clutch includes a plurality of overrunning pawls rotatably connected to the planetary gears and capable of engagement with the internal ring gear.

In preference, the overrunning clutch used is a ratchet wheel, having a plurality of ratchet pawls, the ratchet pawls capable of engagement with the internal ring gear.

In preference, the clutch pieces are made in the form of gear wheels and are rotatably mounted on a housing of the bottom bracket.

In preference, the planet carrier plate is located adjacent to the positioning shifting collar.

In preference, the clutch pieces are controllable using a single position shifter collar to toggle all the clutch pieces at the same time.

### BRIEF DESCRIPTION OF THE DRAWINGS

By way of example, an employment of the invention is described more fully with reference to the accompanying drawings, in which:
Figure 1 is a perspective exploded view of the present invention showing the sun gear and the clutch pawls;

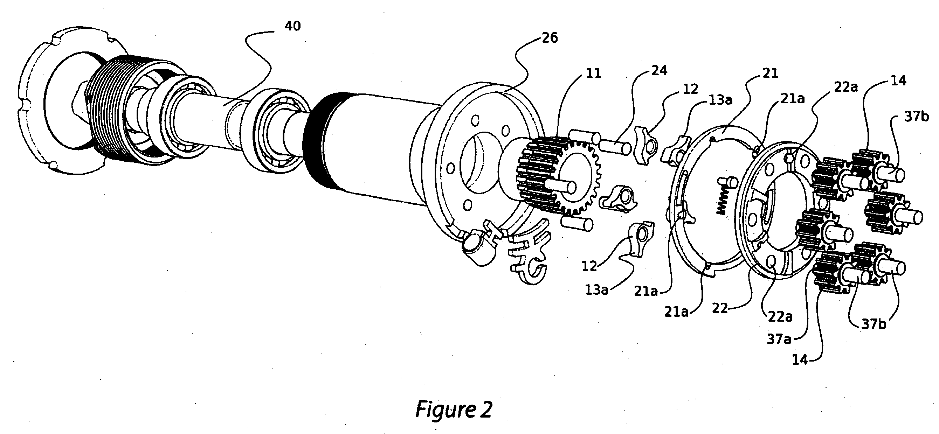

Figure 2 is the perspective view of Figure 1, showing the additional components of the planetary gears;
Figure 3 shows the perspective view of Figure 2, showing the additional features of the ring gear and overrunning clutch pawls.

### DETAILED DESCRIPTION OF THE INVENTION

The gear system (10) of the present invention includes a central wheel (sun gear) (11), planetary gears (14), planetary bracket (15), internal ring gear (17), noting that the internal gear (17) and sprocket wheel (not shown) are permanently connected. The pawls (16) are the overrunning pawls of the overrunning clutch (20), together with the internal gear (17), they form the overrunning clutch (20).

The clutch pieces (12) are used to control the movement of the central wheel (11), and each clutch piece (12) has engagement projections (13a) and (13b), each of which has a separate function, and rotate about the securing pins (24) that pass through the aperture (12a) of the clutch piece (12) and are inserted into the mounting holes (26a) of the securing jacket (26) which is positioned adjacent the bottom bracket housing of the bicycle.

When the clutch pieces (12) are meshed with the central wheel (11) by engagement of the projection (13a) with the teeth (11 a) of the central wheel (11), the central wheel (11) is fixed and unable to rotate. When the clutch pieces (12) are disengaged with the central wheel (11), then central wheel (11) can rotate. Thus the central wheel (11) has two states or positions, the first one is fixed and turnable, and the sprocket wheel (not shown) will have two speeds, allowing the ratio of the gears to change, thus providing different gearing to change the speed.

The position shifter collar (21) is used to control the position of the clutch pieces (12) by operative engagement of the projections (13b) with the notches (21 a). When the position shifter (21) is switched to one direction, the clutch pieces (12) are meshed with the central wheel (11), the central wheel (11) is fixed.

When the position shifter collar (21) is switched or rotated in the opposite direction, the clutch pieces (12) are disengaged with the central wheel (11) and the central wheel (11) can turn. The binder plate (22) and securing jacket (26) are used to secure the position of the overrunning pawls (16) with teeth (30) and the rotary axles of the clutch pieces (12). A pedal (not shown) is then connected to a crank arm (not shown), in this case the drive side crank arm, which in turn is operatively connected to the ring gear (17).

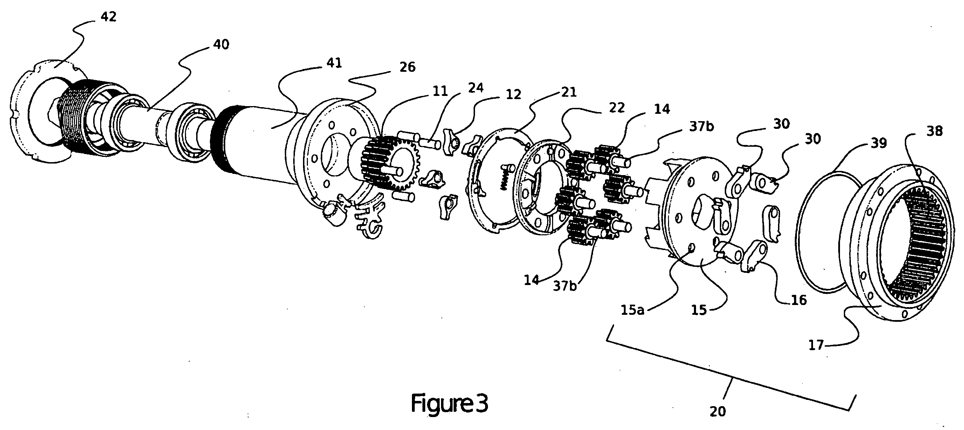

Usually the structure of an overrunning clutch consists of an outer wheel, an inner wheel and a ball bearing component in between. The present invention as shown in Figure 3, shows the overrunning clutch (20) including a ring gear (36) and a number of overrunning pawls (16). The structure of the overrunning clutch (20) is similar in structure to a ratchet wheel. The overrunning pawls (16) are like the pawls of the ratchet wheel, the pawls (16) are installed on the axles (37b) of the planetary gears (14), which are inserted through the planetary bracket (15).

The overrunning pawls (16) have engagement teeth (30) shaped to be able to engage with the inner gear teeth (38) of the ring gear (36).

The gear teeth (38) form the internal ring gear (17) of the planetary gear system of the present invention. By the pressure of a spring (not shown) or other suitable biasing means, the teeth (30) of the overrunning pawls (16) rest firmly on the teeth (38) of the internal gear (17). The width of the internal gear (36) is greater than that of the planetary gears (14), because it has to mesh with the planetary gear (14) and the overrunning pawls (16) at the same time. Although the overrunning clutch (20) is similar to a ratchet wheel, there is still a difference.

The planetary gears (14) have a rear projecting axle (37a) that fits within the aperture (22a) of the binder plate (22), and a front projecting axle (37b) that pass into the apertures (15a) on the planetary bracket (15) so as to allow rotation of the planetary gear (14).

Normally in a ratchet wheel, when the outer wheel turns in one direction, the pawls are released from the wheel, when it turns in the opposite direction, the pawls will stop the wheel from turning.

The functioning of the gear system as shown in Figure 3 shows that it acts more like an overrunning clutch because its function is the same as that of an overrunning clutch. Both the internal ring gear (17) and the overrunning pawls (16) will turn. When the speed of the internal ring gear (17) is higher than that of the overrunning pawls (16), the overrunning pawls (16) will jack up, and disengage with the internal gear teeth (38) of the ring gear (17), slipping over the surface of the internal ring gear (17) the teeth (30) on the overrunning pawls (16) are not engaged therefore the clutch is overrunning.

When the overrunning pawls (16) mesh with the internal gear teeth (38), then the internal gear (17) will turn at the same time.

Here, the function of the overrunning teeth is the same as that of the roller used in the overrunning clutch generally used.

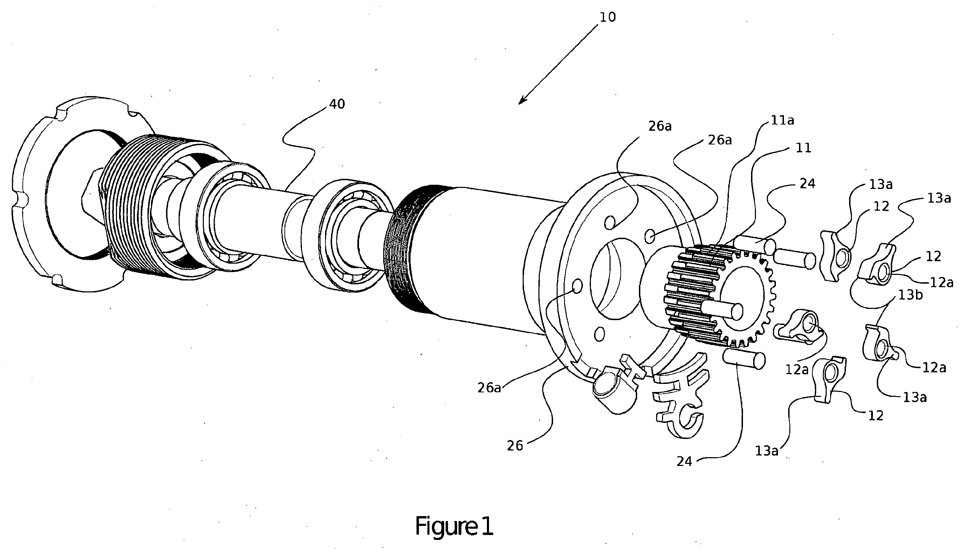

Figure 1 shows the structural diagram and working principle of the sun gear (11), clutch pieces (12) and the position shifter plate or collar (21).

The gear in the diagram is the central wheel, the clutch pieces shown look like the pawls of the overrunning pawls (16) the outer round-shape object is the position shifter. When the shifter moves clockwise, the position shifter will turn, bringing all five clutch pieces (12) to turn around their own axles (24) at the same time. When we the shifter moves anti-clockwise, the clutch pieces (12) will mesh with the central wheel (11), the central wheel is fixed (11). Then when the position shifter collar (21) is moving clockwise, the clutch pieces (12) are disengaged with the central wheel (11), the central wheel can turn. Here, the central wheel is meshed with the planetary gear and the clutch pieces, so it is thicker than the planetary gear.

The principle of this derailleur or bicycle transmission system is as follows Move the position shifter anti-clockwise with a small angle, bringing the clutch pieces (12) to turn so that they are meshed with the central wheel (sun gear) (11), which is fixed at this time. The pedal (not shown), through the bottom bracket axle (40), will drive the planetary gear bracket (15) to turn, the planetary gear then drives the internal ring gear (17), with the spacer ring (39) positioned between, and a sprocket or chain wheel that is attached to the ring gear (17) with increased output speed. When the shifter (21) is moved in the opposite direction (clockwise), clutch pieces (pawls, 12) are disengaged with the central wheel (11), at that time, the bottom bracket also brings the planetary gear bracket to turn, but the central wheel (11) is not fixed yet, it cannot bring the internal gear through the planetary gear to give an output.

The bottom bracket axle (40) resides in the housing (41) within the bottom bracket of the bicycle and is secured by use of the lockring (42) as would be apparent to those skilled in the art.

Because of the pressure from the spring (not shown), the teeth (30) of the overrunning pawls (16) are meshed with internal ring gear (17), the planetary gear bracket (15) through the overrunning pawls (16) directly drives the internal ring gear (17) and the attached front chain wheel (not shown) to give an output. Importantly, for both types of output the turning direction of the front chain wheel is the same.

The overrunning teeth share the same internal gear with the planetary gear, the clutch pieces share the same central wheel with the planetary gear. This is the outstanding characteristic of this derailleur structure. Because of these characteristics, the overrunning clutch (20), clutching structure of the central wheel (11) and the planetary gear system can be built in one body. Not only is the structure of the present invention compact, the thickness of the central wheel and the internal gear is also increased. We apply these characteristics in the design, so that the loading capacity of the derailleur is then increased.

Although the invention has been herein shown and described in what is conceived to be the most practical and preferred embodiment, it is recognized that departures can be made within the scope of the invention, which is not to be limited to the details described herein but it is to be accorded the full scope of the appended claims so as to embrace any and all equivalent devices and apparatus.

## Claims

1. A bicycle transmission system (10) in a bottom bracket set of a bicycle, the transmission system including;
a planetary gear system, having
a sun gear (11),
a plurality of planet gears (14) and
a internal ring gear (17), wherein
a sprocket wheel operatively connected with the internal ring gear of the planetary gear system,
the plurality of planet gears being rotatably mounted to a planet carrier plate (22);
an overrunning clutch (20) capable of engagement with the internal ring gear;
a position shifter collar (21); and
a plurality of clutch pawls mounted in the bottom bracket and being controllable by engagement with and rotation of the position shifter collar, to engaging or disengaging with the sun gear thereby providing a means of changing gears; further **characterised in that** the overrunning clutch includes a plurality of overrunning pawls (16) rotatably connected to the planetary gears and capable of engagement with the internal ring gear.

2. The bicycle transmission system of claim 1, further **characterised in that** the overrunning clutch used is a ratchet wheel, having a plurality of ratchet pawls, the ratchet pawls capable of engagement with the internal ring gear.

3. The bicycle transmission system of claim 1, further **characterised in that** the clutch pawls are made in the form of gear wheels and are rotatably mounted on a housing of the bottom bracket.

4. The bicycle transmission system of claim 1, further **characterised in that** the planet carrier plateis located adjacent to the positioning shifting collar.

5. The bicycle transmission system of any one of claims 1-5, further **characterised in that** the clutch pawls are controllable using a single position shifter collar to toggle all the clutch pawls at the same time.

## Patentansprüche

1. Fahrrad-Getriebesystem (10) in einem Tretlagersatz eines Fahrrads, wobei das Getriebe folgendes aufweist:
ein Planetengetriebesystem, mit
einem Sonnenrad (11),
einer Vielzahl von Planetengetrieben (14) und
einen Innenzahnkranz (17), wobei
ein Kettenrad mit dem Innenzahnkranz des Planetengetriebesystems funktionell verknüpft ist,
die Vielzahl von Planetengetrieben an einer Planeten-Trägerplatte (22) drehbar befestigt sind;
eine Freilaufkupplung (20) zum Eingriff in den Innenzahnkranz in der Lage ist;
eine Positionsschiebemanschette (21); und
eine Vielzahl von Kupplungsklauen, die in dem Tretlager befestigt und durch Eingriff in und Rotation der Positionsschiebemanschette zum Eingriff oder Ausgriff mit dem Sonnenrad steuerbar ist, um dadurch ein Mittel zum Ändern von Gängen bereitzustellen;
weiterhin **dadurch gekennzeichnet, dass** die Freilaufkupplung eine Vielzahl von Freilaufklauen (16) aufweist, die mit den Planetengetrieben drehbar gekoppelt und zum Eingriff in den Innenzahnkranz in der Lage sind.

2. Fahrrad-Getriebesystem nach Anspruch 1, weiterhin **dadurch gekennzeichnet, dass** die verwendete Freilaufkupplung ein Sperrrad mit einer Vielzahl von Sperrklauen ist, die zum Eingriff mit dem Innenzahnkranz in der Lage sind.

3. Fahrrad-Getriebesystem nach Anspruch 1, weiterhin **dadurch gekennzeichnet, dass** die Kupplungsklauen in der Form von Gangrädern hergestellt und an einem Gehäuse des Tretlagers drehbar befestigt sind.

4. Fahrrad-Getriebesystem nach Anspruch 1, weiterhin **dadurch gekennzeichnet, dass** die Planeten-Trägerplatte im Anschluss an die Positionsschiebemanschette angeordnet ist.

5. Fahrrad-Getriebesystem nach einen der Ansprüche 1-5, weiterhin **dadurch gekennzeichnet, dass** die Kupplungsklauen unter Verwendung einer einzigen Positionsschiebemanschette zum gleichzeitigen Umschalten sämtlicher Kupplungsklauen steuerbar sind.

## Revendications

1. Système de transmission de bicyclette (10) dans un jeu de pédalier d'une bicyclette, le système de transmission comprenant:
un système d'engrenage planétaire, ayant
un engrenage planétaire (11),
une pluralité d'engrenages satellites (14) et
une couronne dentée interne (17), dans lequel
une roue dentée reliée de manière opérationnelle à la couronne dentée interne du système d'engrenage planétaire,
la pluralité d'engrenages satellites est montée de manière rotative sur une plaque porte-satellites (22),
un embrayage à roue libre (20) pouvant s'engager avec la couronne dentée interne,
une bague de changement de position (21), et
une pluralité de cliquets d'embrayage montés dans le pédalier et pouvant être commandés par engagement avec la bague de changement de position et par rotation de celle-ci, pour engager ou désengager l'engrenage planétaire en fournissant ainsi un moyen pour changer de vitesses,
**caractérisé en outre en ce que** l'embrayage à roue libre comprend une pluralité de cliquets de roue libre (16) reliés de manière rotative aux engrenages satellites et pouvant s'engager avec la couronne dentée interne.

2. Système de transmission de bicyclette selon la revendication 1, **caractérisé en outre en ce que** l'embrayage à roue libre utilisé est une roue à rochet, ayant une pluralité de cliquets de rochet pouvant s'engager avec la couronne dentée interne.

3. Système de transmission de bicyclette selon la revendication 1, **caractérisé en outre en ce que** les cliquets d'embrayage sont réalisés sous la forme de roues d'engrenage et sont montés de manière rotative sur un boîtier du pédalier.

4. Système de transmission de bicyclette selon la revendication 1, **caractérisé en outre en ce que** la plaque porte-satellites est située adjacente à la bague de changement de position.

5. Système de transmission de bicyclette selon l'une quelconque des revendications 1 à 5, **caractérisé en outre en ce que** les cliquets d'embrayage peuvent être commandés en utilisant une seule bague de changement de position pour basculer tous les cliquets d'embrayage en même temps.
